# EUROPEAN PATENT APPLICATION

(11) **EP 3 681 143 A1**
(43) Date of publication of application: **15.07.2020**
(21) Application number: 18854949.7
(22) Date of filing: 10.09.2018
(51) Int. Cl.: H04N 5/232

(54) **METHOD AND APPARATUS FOR IMPROVING IMAGE FLUENCY**

(30) Priority: 08.09.2017 CN 201710807246
(71) Applicant: ZTE Corporation, Shenzhen, Guangdong 518057 (CN)
(72) Inventor: PAN, Mingdong, Shenzhen Guangdong 518057 (CN)
(74) Representative: Aipex B.V.
(86) International application number: PCT/CN2018/104884
(87) International publication number: WO 2019/047956

(57) **Abstract**

Provided are a method and apparatus for improving image smoothness. The method includes: when a vertical synchronization signal sent by a display arrives, starting to process current frame of data; if processing of the current frame of data is not completed in a vertical synchronization signal period, continuing processing the current frame of data in a predetermined delay duration; and if processing of the current frame of data is still not completed in the predetermined delay duration, abandoning processing the current frame of data and continuing displaying the previous frame of image on the display.

## Description

### TECHNICAL FIELD

The present invention relates to, but is not limited to, the field of terminal technologies.

### BACKGROUND

At present, electronic devices (such as mobile phones) basically use the mobile industry processor interface (MIPI) transmission protocol between the processing chip and the screen. According to the protocol, provided are two transmission modes: video mode and cmd mode. In these two modes, vertical synchronization signals (VSyncs) are generated in different manners. If the video mode is adopted, VSyncs are sent by the processing chip of an electronic device. If the refresh rate is 60 fps, then one VSync is generated every 16.7ms or so. That is, the processing chip of the electronic device needs to complete processing of the to-be-displayed image within this period of time and then send the image to the screen so that the screen displays the image. However, due to chip performance issues and resource contention issues in multitasking, the case where processing of one frame of image is not completed within 16.7ms may occur. In this case, the processing chip resends the previous frame of image to the screen so that the screen displays this frame of image, that is, repeatedly displays the previous frame of image. In this case, the user easily feels a lag. In view of this problem, no effective solution has yet been proposed.

### SUMMARY

According to embodiments of the present invention, provided is a method for improving image smoothness. The method includes: when a VSync sent by a display arrives, starting a processing of current frame of data; in response to determining that the processing of the current frame of data is not completed in a VSync period, continuing the processing of the current frame of data in a predetermined delay duration; and in response to determining that the processing of the current frame of data is still not completed in the predetermined delay duration, abandoning the processing of the current frame of data and continuing displaying the previous frame of image on the display.

According to embodiments of the present invention, further provided is an apparatus for improving image smoothness. The apparatus includes a trigger module, which is configured to, in response to determining that a VSync sent by a display arrives, start the processing of a current frame of data; a delay module, which is configured to, in response to determining that the processing of the current frame of data is not completed in a VSync period, continue the processing of the current frame of data in a predetermined delay duration; and a detection module, which is configured to, in response to determining that the processing of the current frame of data is still not completed in the predetermined delay duration, abandon the processing of the current frame of data and cause the display to continue displaying the previous frame of image.

According to embodiments of the present invention, further provided is an electronic device. The electronic device includes a display; a memory storing a computer program; and a processor which, when executing the computer program, performs the method for improving image smoothness according to the present invention.

Further provided is a computer-readable storage medium. The computer-readable storage medium stores a computer program which, when executed by a processor, causes the processor to perform the method for improving image smoothness according to the present invention.

Other features and advantages of the present invention will be elaborated hereinafter in the description and, moreover, partially become apparent from the description, or will be understood through implementation of the present invention. The object and other advantages of the present invention may be achieved and obtained through structures set forth in the description, claims and drawings.

### BRIEF DESCRIPTION OF DRAWINGS

The accompanying drawings are used to provide a further understanding of the solution of the present invention and are a part of the description. The accompanying drawings are used to illustrate the solution of the present invention in conjunction with embodiments of the present invention and are not intended to limit the solution of the present invention.
FIG. 1 and FIG. 2 are example diagrams illustrating synchronization between VSyncs and image processing by a CPU and a GPU in the related art;
FIG. 3 is a flowchart of a method for improving image smoothness according to an embodiment of the present invention;
FIG. 4 is an example diagram of a VSync delay according to an embodiment of the present invention;
FIG. 5 is a structure diagram of an apparatus for improving image smoothness according to an embodiment of the present invention;
FIG. 6 is an example structure diagram of an electronic device according to an embodiment of the present invention; and
FIG. 7 is a flowchart illustrating an example of a method for improving image smoothness according to an embodiment of the present invention.

### DETAILED DESCRIPTION

The object, solution and advantages of the present invention will be more apparent from a detailed description of embodiments of the present invention in conjunction with the accompanying drawings. It is to be noted that if not in collision, the embodiments described herein and the features thereof may be combined with each other.

The steps shown in the flowcharts in the accompanying drawings may be performed in a computer system such as a group of computer-executable instructions. Moreover, although logical sequences are shown in the flowcharts, in some cases, the shown or described steps may be performed in sequences different from the sequences described herein.

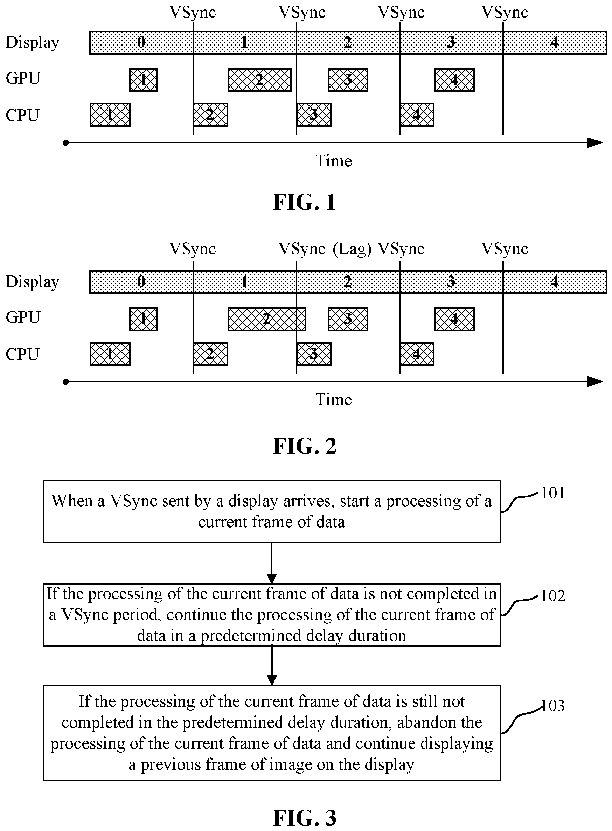

FIG. 1 and FIG. 2 are example diagrams illustrating synchronization between VSyncs and image processing by a CPU and a GPU in the related art.

As shown in FIG. 1, if the central processing unit (CPU) and the graphics processing unit (GPU) complete processing of one frame of data within one VSync period, then this frame of image is displayed normally on the display and does not undergo a lag. As shown in FIG. 2, if the CPU and the GPU fail to complete processing of one frame of data within one VSync period, then this frame of image cannot be displayed normally on the display and undergoes a lag.

To solve the lag problem, the present invention provides a solution to ensure, through a real-time adjustment of the VSync period, that the CPU and the GPU can complete processing of one frame of data within one VSync period, thereby avoiding a lag and effectively improving the display smoothness.

According to embodiments of the present invention, if the CPU and the GPU do not complete processing of frame data within one VSync period (for example, 16.7ms), then the VSync period is extended by 1ms to 2ms so that the CPU and the GPU can complete processing of the current frame of data within the VSync period, thereby ensuring normal image display on the display and improving the smoothness of the system. Embodiments of the present invention are applicable to scenarios that are not very demanding in terms of real time but are relatively demanding in terms of display effects, for example, a scenario where a video file is played.

The solution of the present invention may be implemented by an electronic device supporting video playing or image display. The electronic device may be implemented in various forms. For example, the electronic device may be, but is not limited to, a mobile terminal such as a mobile phone, a tablet computer, a notebook computer, a palmtop computer, a personal digital assistant (PDA), a portable media player (PMP), a navigation device, a wearable device, a smart bracelet and a pedometer, and a fixed terminal such as a digital TV and a desktop computer.

Implementations of the solution of the present invention will be described below in detail.

FIG. 3 is a flowchart of a method for improving image smoothness according to an embodiment of the present invention.

As shown in FIG. 3, the method for improving image smoothness according to this embodiment of the present invention includes steps 301 to 303.

In step 301, when a VSync sent by a display arrives, a processing of a current frame of data is started.

In step 302, if the processing of the current frame of data is not completed in a VSync period, the processing of the current frame of data is continued in a predetermined delay duration.

In step 303, if the processing of the current frame of data is still not completed in the predetermined delay duration, the processing of the current frame of data is abandoned and the display continues displaying a previous frame of image.

In practical applications, for the purpose of synchronizing the display process of the display with the video controller of the electronic device system, the display sends a VSync after drawing of one frame is completed and before the next frame is about to be prepared. Typically, the display is refreshed at a fixed frequency at which the VSync is generated.

According to this embodiment of the present invention, the VSync period may be extended by a predetermined duration in various ways. In one implementation, it is feasible to delay the VSync period by setting a timer. For example, when processing of each frame of data is started, a timer is set in the processor. The duration set for the timer may be the sum of the VSync period and the predetermined duration (for example, if the VSync period is 16.7ms and the predetermined duration is 2ms, then the set duration is 16.7 + 2ms). When the VSync arrives and the timer is triggered and started, if processing of the current frame of data is still not completed when the timer reaches the set duration, then the processor abandons processing the current frame of data and sends an interrupt signal to the display so that the display continues displaying the previous frame of image; if the timer does not reach the set duration, then the processor continues processing the current frame of data until completing the processing.

According to this embodiment of the present invention, the predetermined delay duration may be 1ms to 2ms. Of course, the predetermined duration may be set to other values and is not limited in the present invention.

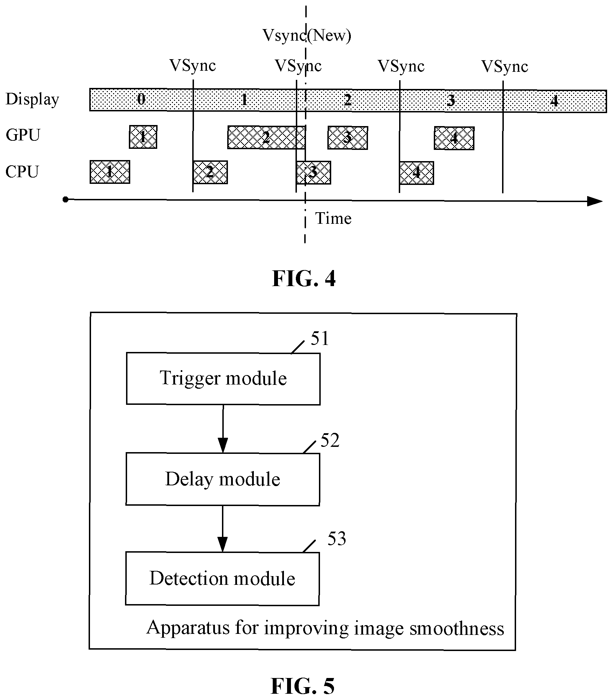

FIG. 4 is an example diagram of a VSync delay according to an embodiment of the present invention.

As shown in FIG. 4, after the preceding processing in this embodiment is performed, it is feasible, when processing of a certain frame of data cannot be synchronized with the VSync period, to extend the processing duration so that the CPU and the GPU can complete processing of the current frame of data within the extended duration and thereby the screen can display the image normally.

Processing of the frame of data may include that the CPU calculates display content of the current frame of data and submits the display content to the GPU after the calculation is completed; the GPU performs transformation processing, composition processing and rendering processing and then submits the rendering result to the frame buffer; and the video controller reads the rendering result from the frame buffer and loads the rendering result onto the display.

FIG. 5 is a structure diagram of an apparatus for improving image smoothness according to an embodiment of the present invention.

As shown in FIG. 5, the apparatus for improving image smoothness according to the present invention may include a trigger module 51, a delay module 52 and a detection module 53.

The trigger module 51 is configured such that when a VSync arrives, processing of current frame of data is started.

The delay module 52 is configured such that if processing of the current frame of data is not completed in a VSync period, processing of the current frame of data is continued in a predetermined delay duration.

The detection module 53 is configured such that if processing of the current frame of data is still not completed in the predetermined delay duration, processing of the current frame of data is abandoned and the display continues displaying a previous frame of image.

The apparatus for improving image smoothness according to this embodiment of the present invention may further include a timer. The set duration of the timer is the sum of the VSync period and the predetermined delay duration. The timer is started when the VSync arrives, and before the timer reaches the set duration, the trigger module 51 or the delay module 52 is configured such that processing of the current frame of data is continued until processing of the current frame of data is completed.

According to this embodiment of the present invention, if processing of the current frame of data is still not completed when the timer reaches the set duration, the detection module 53 is configured such that processing of the current frame of data is abandoned and the display continues displaying the previous frame of image; and if processing of the current frame of data is completed before the timer reaches the set duration, the display displays an image corresponding to the current frame of data.

According to this embodiment of the present invention, the predetermined delay duration may be 1ms to 2ms. Of course, the predetermined duration may be set to other values and is not limited in the present invention.

The apparatus for improving image smoothness according to this embodiment of the present invention may further include a CPU, a GPU, a frame buffer and a video controller. The CPU is configured to calculate display content of the current frame of data and submit the display content to the GPU after the calculation is completed. The GPU is configured to perform transformation processing, composition processing and rendering processing and then submit the rendering result to the frame buffer. The video controller is configured to read the rendering result from the frame buffer and load the rendering result onto the display.

In practical applications, the preceding modules in this embodiment may be software, hardware, or a combination of the two. For example, the preceding modules may be implemented by a CPU in an electronic device (for example, a mobile phone). In practical applications, the preceding apparatus in this embodiment is applicable to an electronic device supporting video playing or image display.

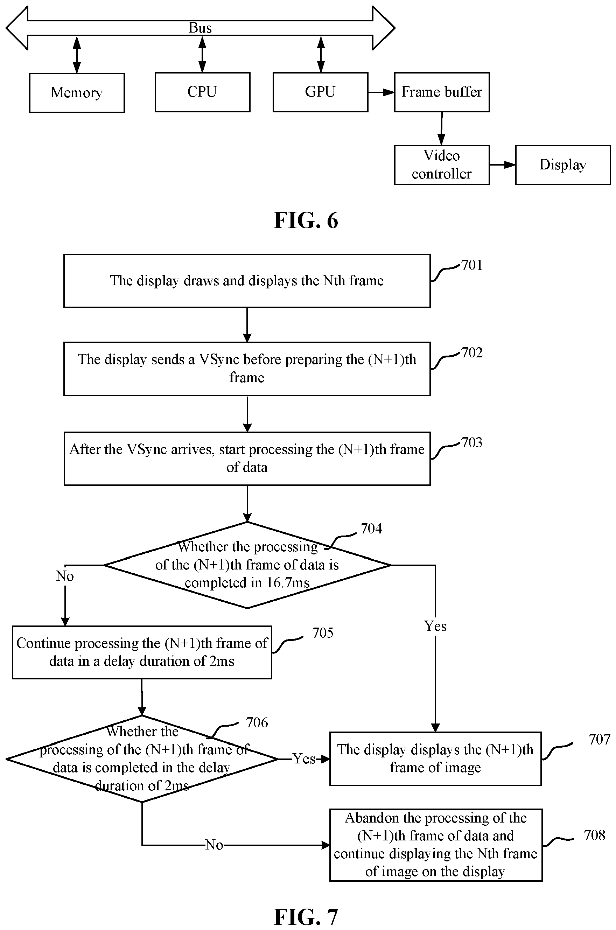

FIG. 6 is an example structure diagram of an electronic device according to an embodiment of the present invention.

As shown in FIG. 6, the electronic device according to this embodiment of the present invention may include a display, a memory and a processor (for example, a CPU and a GPU). The memory stores a computer program. When executing the computer program, the processor performs the method for improving image smoothness according to embodiments of the present invention.

In one implementation, the electronic device may further include, but is not limited to, a video controller and a bus, as shown in FIG. 6. The CPU, the GPU and the memory are communicatively connected to each other through a bus. The CPU is configured to calculate display content and submit the display content to the GPU. The GPU is configured to perform rendering processing and other processing and submit the rendering result to the frame buffer after completing the rendering. The video controller is configured to read the data in the frame buffer line by line according to VSync under the control of the GPU and transmit the data to the display after possible digital-to-analog conversion so that the display performs displaying.

Embodiments of the present invention further provide a computer-readable storage medium. The computer-readable storage medium stores a computer program which, when executed by a processor, causes the processor to perform the method for improving image smoothness according to embodiments of the present invention.

In practical applications, the computer-readable storage medium is applicable to an electronic device according to the present invention.

Exemplary implementations of the preceding embodiments will be described below in detail. It is to be noted that the following examples may be combined with each other. In addition, in practical applications, the preceding embodiments may have other implementations. The processes, implementation processes and the like in the following examples may also be adjusted according to actual application requirements.

In this example, the implementation process of improving image smoothness is described in detail by using a 60-fps refresh rate of the display as an example.

FIG. 7 is a flowchart illustrating an example of a method for improving image smoothness according to an embodiment of the present invention.

As shown in FIG. 7, the method according to this example may include steps 701 to 708.

In step 701, the display draws and displays the Nth frame of image.

In step 702, the display sends a VSync before preparing the (N+1)th frame of image.

In step 703, after the VSync arrives, a processing of the (N+1)th frame of data is started.

In step 704, it is determined whether the processing of the (N+1)th frame of data is completed in the VSync period (that is, 16.7ms). If the processing is completed, step 707 is performed; if the processing is not completed, step 705 is performed.

In step 705, the processing of the (N+1)th frame of data is continued in a delay duration (for example, 2ms).

In step 706, it is determined whether the processing of the (N+1)th frame of data is completed in the delay duration (for example, 2ms). If the processing is completed, step 707 is performed; if the processing is not completed, step 708 is performed.

In step 707, the display displays the (N+1)th frame of image.

In step 708, the processing of the (N+1)th frame of data is abandoned and the display continues displaying the Nth frame of image.

It is to be understood by those of ordinary skill in the art that all or part of the steps in the preceding methods may be implemented by related hardware (for example, a processor) instructed by one or more programs, and these programs may be stored in a computer-readable storage medium such as a ROM, a magnetic disk, an optical disk or the like. Optionally, all or part of the steps in the preceding embodiments may also be implemented using one or more integrated circuits. Accordingly, the modules/units in the preceding embodiments may be implemented by hardware. For example, the functions of these modules/units may be implemented by one or more integrated circuits. Alternatively, these modules/units may be implemented by software function modules. For example, the functions of these modules/units may be implemented by a processor that executes programs/ instructions stored in a storage medium. The present invention is not limited to any specific combination of hardware and software.

The above illustrates basic principles, main features and advantages of the present invention. The present invention is not limited to the preceding embodiments. Only the principles of the present invention are illustrated in the preceding embodiments and description. Various modifications and improvements may be made in the present invention without departing from the spirit and scope of the present invention. These modifications and improvements are within the scope of the present invention.

## Claims

1. A method for improving image smoothness, comprising:
when a vertical synchronization signal sent by a display arrives, starting a processing of a current frame of data;
in response to determining that the processing of the current frame of data is not completed in a period of the vertical synchronization signal, continuing the processing of the current frame of data in a predetermined delay duration; and
in response to determining that the processing of the current frame of data is still not completed in the predetermined delay duration, abandoning the processing of the current frame of data and continuing displaying a previous frame of image on the display.

2. The method of claim 1, further comprising: setting a timer, wherein a set duration of the timer is a sum of the period of the vertical synchronization signal and the predetermined delay duration, the timer is started in response to determining that the vertical synchronization signal arrives, and before the timer reaches the set duration, the processing of the current frame of data is continued until the processing of the current frame of data is completed.

3. The method of claim 2, wherein
if the processing of the current frame of data is still not completed in response to determining that the timer reaches the set duration, the processing of the current frame of data is abandoned and the display continues displaying the previous frame of image; and
if the processing of the current frame of data is completed before the timer reaches the set duration, the display displays an image corresponding to the current frame of data.

4. The method of any one of claims 1 to 3, wherein the predetermined delay duration is 1ms to 2ms.

5. The method of claim 1, wherein the step of processing the current frame of data comprises:
operating a central processing unit to calculate display content of the current frame of data and to submit the display content to a graphics processing unit after the calculation is completed;
operating the graphics processing unit to perform transformation processing, composition processing and rendering processing and then to submit a rendering result to a frame buffer; and operating a video controller to read the rendering result from the frame buffer and to load the rendering result onto the display.

6. An apparatus for improving image smoothness, comprising:
a trigger module, which is configured to, in response to determining that a vertical synchronization signal sent by a display arrives, start a processing of a current frame of data;
a delay module, which is configured to, in response to determining that the processing of the current frame of data is not completed in a period of the vertical synchronization signal, continue the processing of the current frame of data in a predetermined delay duration; and
a detection module, which is configured to, in response to determining that the processing of the current frame of data is still not completed in the predetermined delay duration, abandon the processing of the current frame of data and continue displaying a previous frame of image on the display.

7. The apparatus of claim 6, further comprising: a timer, and
wherein a set duration of the timer is a sum of the period of the vertical synchronization signal and the predetermined delay duration, the timer is started in response to determining that the vertical synchronization signal arrives, and before the timer reaches the set duration, the trigger module or the delay module is configured to continue the processing of the current frame of data until the processing of the current frame of data is completed.

8. The apparatus of claim 7, wherein
if the processing of the current frame of data is still not completed in response to determining that the timer reaches the set duration, the detection module is configured to abandon the processing of the current frame of data and continue displaying the previous frame of image on the display; and
if the processing of the current frame of data is completed before the timer reaches the set duration, the display displays an image corresponding to the current frame of data.

9. The apparatus of any one of claims 6 to 8, wherein the predetermined delay duration is 1ms to 2ms.

10. The apparatus of claim 6, further comprising a central processing unit, a graphics processing unit, a frame buffer and a video controller, wherein
the central processing unit is configured to calculate display content of the current frame of data and submit the display content to the graphics processing unit after the calculation is completed;
the graphics processing unit is configured to perform transformation processing, composition processing and rendering processing and then submit a rendering result to the frame buffer; and the video controller is configured to read the rendering result from the frame buffer and load the rendering result onto the display.

11. An electronic device, comprising a display, a memory and a processor, wherein
the memory stores a computer program; and
when executing the computer program, the processor performs the method for improving image smoothness of any one of claims 1 to 5.

12. A computer-readable storage medium storing a computer program which, when executed by a processor, causes the processor to perform the method for improving image smoothness of any one of claims 1 to 5.
